# EUROPEAN PATENT SPECIFICATION

(11) **EP 3 611 699 B1**
(45) Date of publication and mention of the grant of the patent: **07.10.2026**
(21) Application number: 18189012.0
(22) Date of filing: 14.08.2018
(51) Int. Cl.: G06T 7/11

(54) **IMAGE SEGMENTATION USING DEEP LEARNING TECHNIQUES**
BILDSEGMENTIERUNG MITTELS TECHNIKEN DES TIEFGEHENDEN LERNENS
SEGMENTATION D'IMAGE PAR TECHNIQUES D'APPRENTISSAGE PROFOND

(43) Date of publication of application: 19.02.2020
(73) Proprietor: Siemens Healthineers AG, 91301 Forchheim (DE)
(72) Inventor: Tan, Chaowei, Piscatawa, NJ 08854 (US); Yan, Zhennan, West Windsor, NJ 08550 (US); Zhao, Liang, Shanghai 200232 (CN); Liao, Shu, Chester Springs, PA 19425 (US); Guo, Yimo, Chester Springs, PA 19425 (US); Bhatia, Parmeet Singh, Paoli, PA 19301 (US); Zhan, Yiqiang, West Chester, Pennsylvania 19380 (US); Zhou, Xiang Sean, Exton, Pennsylvania 19341 (US)
(74) Representative: Bals & Vogel Patentanwälte PartGmbB

(56) References cited:
- CN-A- 107 545 245
- XU XUANANG ET AL: "Automatic bladder segmentation from CT images using deep CNN and 3D fully connected CRF-RNN", INTERNATIONAL JOURNAL OF COMPUTER ASSISTED RADIOLOGY AND SURGERY, SPRINGER, DE, vol. 13, no. 7, 19 March 2018 (2018-03-19), pages 967 - 975, XP036532798, ISSN: 1861-6410, [retrieved on 20180319], DOI: 10.1007/S11548-018-1733-7
- A. DALMIA ET AL.: "Exploring Deep Networks for Tumour Segmentation in Infrared Images", 14TH QUANTITATIVE INFRARED THERMOGRAPHY CONFERENCE, 25 June 2018 (2018-06-25), Berlin, Germany, pages 1 - 10, XP002784711, Retrieved from the Internet <URL:http://www.qirt2018.de/portals/qirt18/doc/We.4.B.4.pdf> [retrieved on 20180912]
- DAI, W.; DOYLE, J.; LIANG, X.; ZHANG, H.; DONG, N.; LI, Y.; XING, E.P.: "Scan: Structure correcting adversarial network for chest x-rays organ segmentation", ARXIV PREPRINT ARXIV: 1703.08770, 2017, XP002784712
- TENNAKOON RUWAN ET AL: "Retinal fluid segmentation in OCT images using adversarial loss based convolutional neural networks", 2018 IEEE 15TH INTERNATIONAL SYMPOSIUM ON BIOMEDICAL IMAGING (ISBI 2018), IEEE, 4 April 2018 (2018-04-04), pages 1436 - 1440, XP033348420, [retrieved on 20180523], DOI: 10.1109/ISBI.2018.8363842
- PHILIPPE BERGER ET AL: "A volumetric deep Convolutional Neural Network for simulation of dark matter halo catalogues", ARXIV.ORG, CORNELL UNIVERSITY LIBRARY, 201 OLIN LIBRARY CORNELL UNIVERSITY ITHACA, NY 14853, 11 May 2018 (2018-05-11), XP080877357

## Description

### TECHNICAL FIELD

The present disclosure generally relates to digital medical image data processing, and more particularly to image segmentation using deep learning techniques.

### BACKGROUND

The field of medical imaging has seen significant advances since the time X-Rays were first used to determine anatomical abnormalities. Medical imaging hardware has progressed from modern machines, such as Magnetic Resonance (MR) imaging scanners, Computed Tomographic (CT) scanners and Positron Emission Tomographic (PET) scanners, to multimodality imaging systems such as PET-CT and PET-MRI systems. Because of large amount of image data generated by such modern medical scanners, there has been and remains a need for developing image processing techniques that can automate some or all of the processes to determine the presence of anatomical abnormalities in scanned medical images. Approaches for image processing are known from Xu et al.: Automatic bladder segmentation from CT images using deep CNN and 3D fully connected CRF-RNN, International Journal of Computer Assisted Radiology and Surgery (2018), vol. 13(7), p. 967-975; Dalmia et al.: Exploring Deep Learning Networks for Tumor Segmentation in Infrared Images, 14th Quantitative InfraRed Thermography Conference, 2018; and CN 107545245 A.

Digital medical images are constructed using raw image data obtained from a scanner, for example, a computerized axial tomography (CAT) scanner, magnetic resonance imaging (MRI), etc. Digital medical images are typically either a two-dimensional ("2D") image made of pixel elements, a three-dimensional ("3D") image made of volume elements ("voxels") or a four-dimensional ("4D") image made of dynamic elements ("doxels"). Such 2D, 3D or 4D images are processed using medical image recognition techniques to determine the presence of anatomical abnormalities or pathologies, such as cysts, tumors, polyps, aneurysms, etc. Given the amount of image data generated by any given image scan, it is preferable that an automatic technique should point out anatomical features in the selected regions of an image to a doctor for further diagnosis of any disease or condition.

Automatic image processing and recognition of structures within a medical image are generally referred to as Computer-Aided Detection (CAD). A CAD system can process medical images, localize and segment anatomical structures, including possible abnormalities (or candidates), for further review. Recognizing anatomical structures within digitized medical images presents multiple challenges. For example, a first concern relates to the accuracy of recognition of anatomical structures within an image. A second area of concern is the speed of recognition. Because medical images are an aid for a doctor to diagnose a disease or condition, the speed with which an image can be processed and structures within that image recognized can be of the utmost importance to the doctor in order to reach an early diagnosis.

Knee osteoarthritis (OA) is the most common cause of limited mobility in adults. CAD techniques may be used to segment femur head bone and cartilage from images to diagnose knee osteoarthritis. However, there are several challenges. First, the number of available images may be limited (e.g., 100 scans from 64 subjects in total). Second, the ground-truth (GT) labels for femur bone and cartilage may not be ideal.

There may be many under- and over-segmentation issues caused by low-quality labels. Third, deep learning techniques for three-dimensional (3D) segmentation are not well understood.

### SUMMARY

Described herein is a framework for image segmentation. In accordance with one aspect, the framework receives a training image data set of a structure of interest. The training image data set may be augmented and used to train a deep learning model to segment the structure of interest. The deep learning model may comprise a modified V-net implemented in a generative adversarial network (GAN) architecture. The structure of interest may then be segmented by passing the current image through the trained deep learning model.

In a first aspect, a system for image segmentation is provided, the system comprising: a non-transitory memory device for storing computer readable program code; and a processor device in communication with the memory device, the processor being operative with the computer readable program code to perform steps including receiving a training image data set of a structure of interest, augmenting the training image data set, training a deep learning model with the augmented training image data set to segment the structure of interest, wherein the deep learning model comprises a modified V-net implemented in a generative adversarial network (GAN) architecture, and segmenting the structure of interest in a current image by passing the current image through the trained deep learning model.

According to the invention, the structure of interest comprises bone cartilage.

Further, preferred is a system, wherein the modified V-net comprises three or less pooling layers.

According to the invention, the deep learning network comprises a generator to predict a segmentation mask image and a discriminator to distinguish between a manually annotated input image and the segmentation mask image.

Further, the generator comprises the modified V-net including multiple residual blocks. At least one of the multiple residual blocks comprises only two volumetric convolutional layers, wherein each of the volumetric convolutional layers precedes a batch normalization layer. Alternatively, at least one of the residual blocks can comprise only three volumetric convolutional layers, wherein each of the volumetric convolutional layers precedes a batch normalization layer.

According to the invention, the modified V-net comprises only two pooling layers. Further, preferred is a system, wherein the discriminator comprises a deep convolutional neural network.

In a second aspect, a method of image segmentation is provided, the method comprising: receiving a training image data set of a structure of interest; training a deep learning model with a training image data set to segment the structure of interest, wherein the deep learning model includes a modified V-net implemented with residual blocks, wherein at least one of the residual blocks includes a batch normalization layer after each volumetric convolutional layer; and segmenting the structure of interest in a current image by passing the current image through the trained deep learning model.

Preferred is a method, wherein segmenting the structure of interest in the current image comprises segmenting a femur head bone in the current image.

Further, preferred is a method, wherein in the method further comprises augmenting the training image data set to increase number of images in the training image data set. According to the invention, the deep learning model comprises a volumetric convolutional layer, a batch normalization layer and a parametric rectified linear unit prior to a first residual block.

Preferred is a method, wherein the deep learning model is implemented in a generative adversarial network (GAN) architecture that includes a generator to predict a segmentation mask image and a discriminator to distinguish between a manually annotated input image and the segmentation mask image, wherein the modified V-net is implemented as the generator. Training the deep learning model can comprise training the generator and the discriminator alternately. Alternatively, training the generator and the discriminator alternately can comprise: training the generator for two iterations by keeping the discriminator untrainable; and training the discriminator for one iteration by keeping the generator untrainable.

Preferred is a method, wherein the residual blocks comprise a first residual block with only one volumetric convolutional layer preceding a batch normalization layer.

Further, preferred is a method, wherein the residual blocks comprise a second residual block with only two volumetric convolutional layers, wherein each of the two volumetric convolutional layers precedes a batch normalization layer.

Further, preferred is a method, wherein the residual blocks comprise a third residual block with only three volumetric convolutional layers, wherein each of the three volumetric convolutional layers precedes a batch normalization layer.

In a third aspect, one or more non-transitory computer-readable media embodying instructions executable by machine to perform operations is/are provided, comprising: receiving a training image data set of a structure of interest; training a deep learning model with a training image data set to segment the structure of interest, wherein the deep learning model includes a modified V-net implemented with residual blocks, wherein at least one of the residual blocks includes a batch normalization layer after each volumetric convolutional layer; and segmenting the structure of interest in a current image by passing the current image through the trained deep learning model.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings.
FIG. 1 is a block diagram illustrating an exemplary system;
FIG. 2 shows an exemplary method of image segmentation by a computer system;
FIG. 3a shows an original V-Net component and an exemplary modified V-Net component;
FIG. 3b shows exemplary architectures of three residual blocks;
FIG. 4 shows an exemplary architecture of a hybrid model; and
FIG. 5 shows exemplary current images of segmented femur bone cartilage.

### DETAILED DESCRIPTION

In the following description, numerous specific details are set forth such as examples of specific components, devices, methods, etc., in order to provide a thorough understanding of implementations of the present framework. It will be apparent, however, to one skilled in the art that these specific details need not be employed to practice implementations of the present framework. In other instances, well-known materials or methods have not been described in detail in order to avoid unnecessarily obscuring implementations of the present framework. While the present framework is susceptible to various modifications and alternative forms, specific embodiments thereof are shown by way of example in the drawings and will herein be described in detail. It should be understood, however, that there is no intent to limit the invention to the particular forms disclosed; on the contrary, the intention is to cover all modifications, equivalents, and alternatives falling within the scope of the invention. Furthermore, for ease of understanding, certain method steps are delineated as separate steps; however, these separately delineated steps should not be construed as necessarily order dependent in their performance.

The term "x-ray image" as used herein may mean a visible x-ray image (*e.g.*, displayed on a video screen) or a digital representation of an x-ray image (*e.g.*, a file corresponding to the pixel output of an x-ray detector). The term "in-treatment x-ray image" as used herein may refer to images captured at any point in time during a treatment delivery phase of an interventional or therapeutic procedure, which may include times when the radiation source is either on or off. From time to time, for convenience of description, CT imaging data (*e.g*., cone-beam CT imaging data) may be used herein as an exemplary imaging modality. It will be appreciated, however, that data from any type of imaging modality including but not limited to high-resolution computed tomography (HRCT), x-ray radiographs, MRI, PET (positron emission tomography), PET-CT, SPECT, SPECT-CT, MR-PET, 3D ultrasound images or the like may also be used in various implementations.

Unless stated otherwise as apparent from the following discussion, it will be appreciated that terms such as "segmenting," "generating," "registering," "determining," "aligning," "positioning," "processing," "computing," "selecting," "estimating," "detecting," "tracking" or the like may refer to the actions and processes of a computer system, or similar electronic computing device, that manipulates and transforms data represented as physical (*e.g*., electronic) quantities within the computer system's registers and memories into other data similarly represented as physical quantities within the computer system memories or registers or other such information storage, transmission or display devices. Embodiments of the methods described herein may be implemented using computer software. If written in a programming language conforming to a recognized standard, sequences of instructions designed to implement the methods can be compiled for execution on a variety of hardware platforms and for interface to a variety of operating systems. In addition, implementations of the present framework are not described with reference to any particular programming language. It will be appreciated that a variety of programming languages may be used.

As used herein, the term "image" refers to multi-dimensional data composed of discrete image elements (*e.g*., pixels for 2D images and voxels for 3D images). The image may be, for example, a medical image of a subject collected by computer tomography, magnetic resonance imaging, ultrasound, or any other medical imaging system known to one of skill in the art. The image may also be provided from non-medical contexts, such as, for example, remote sensing systems, electron microscopy, etc. Although an image can be thought of as a function from R³ to R, or a mapping to R³, the present methods are not limited to such images, and can be applied to images of any dimension, *e.g*., a 2D picture or a 3D volume. For a 2- or 3-dimensional image, the domain of the image is typically a 2- or 3-dimensional rectangular array, wherein each pixel or voxel can be addressed with reference to a set of 2 or 3 mutually orthogonal axes. The terms "digital" and "digitized" as used herein will refer to images or volumes, as appropriate, in a digital or digitized format acquired via a digital acquisition system or via conversion from an analog image.

The terms "pixels" for picture elements, conventionally used with respect to 2D imaging and image display, and "voxels" for volume image elements, often used with respect to 3D imaging, can be used interchangeably. It should be noted that the 3D volume image is itself synthesized from image data obtained as pixels on a 2D sensor array and displayed as a 2D image from some angle of view. Thus, 2D image processing and image analysis techniques can be applied to the 3D volume image data. In the description that follows, techniques described as operating upon pixels may alternately be described as operating upon the 3D voxel data that is stored and represented in the form of 2D pixel data for display. In the same way, techniques that operate upon voxel data can also be described as operating upon pixels. In the following description, the variable x is used to indicate a subject image element at a particular spatial location or, alternately considered, a subject pixel. The terms "subject pixel" or "subject voxel" are used to indicate a particular image element as it is operated upon using techniques described herein.

The present framework provides at least one deep learning model to automatically segment anatomical structures from three-dimensional (3D) image data. The deep learning model may be based on a modified V-net. A batch normalization layer may be added to each of the volumetric convolutional layers in the modified V-net. In some implementations, the deep learning model includes a hybrid model that includes a modified V-net implemented in a generative adversarial network (GAN) architecture. The framework may apply one or more augmentation strategies to enlarge the training image data set for training the deep learning model to enhance its robustness. Parameter tuning strategies may further be applied to obtain good segmentation models. The present framework achieved an improved segmentation accuracy, with about 90% dice score for femur bone segmentation and 77.5% dice score for cartilage segmentation. These and other exemplary features and advantages will be described in more detail herein.

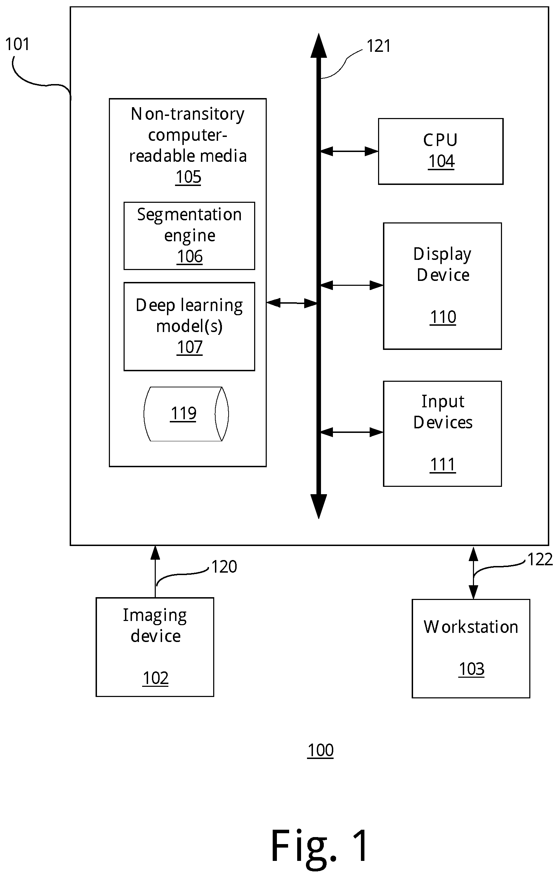

FIG. 1 is a block diagram illustrating an exemplary system 100. The system 100 includes a computer system 101 for implementing the framework as described herein. In some implementations, computer system 101 operates as a standalone device. In other implementations, computer system 101 may be connected (e.g., using a network) to other machines, such as imaging device 102 and workstation 103. In a networked deployment, computer system 101 may operate in the capacity of a server (e.g., thin-client server), a cloud computing platform, a client user machine in server-client user network environment, or as a peer machine in a peer-to-peer (or distributed) network environment.

In some implementations, computer system 101 comprises a processor or central processing unit (CPU) 104 coupled to one or more non-transitory computer-readable media 105 (e.g., computer storage or memory), display device 110 (e.g., monitor) and various input devices 111 (e.g., mouse or keyboard) via an input-output interface 121. Computer system 101 may further include support circuits such as a cache, a power supply, clock circuits and a communications bus. Various other peripheral devices, such as additional data storage devices and printing devices, may also be connected to the computer system 101.

The present technology may be implemented in various forms of hardware, software, firmware, special purpose processors, or a combination thereof, either as part of the microinstruction code or as part of an application program or software product, or a combination thereof, which is executed via the operating system. In some implementations, the techniques described herein are implemented as computer-readable program code tangibly embodied in non-transitory computer-readable media 105. In particular, the present techniques may be implemented by segmentation engine 106, one or more deep learning models 107 and database 119.

Non-transitory computer-readable media 105 may include random access memory (RAM), read-only memory (ROM), magnetic floppy disk, flash memory, and other types of memories, or a combination thereof. The computer-readable program code is executed by CPU 104 to process medical data retrieved from, for example, database 119. As such, the computer system 101 is a general-purpose computer system that becomes a specific purpose computer system when executing the computer-readable program code. The computer-readable program code is not intended to be limited to any particular programming language and implementation thereof. It will be appreciated that a variety of programming languages and coding thereof may be used to implement the teachings of the disclosure contained herein.

The same or different computer-readable media 105 may be used for storing a database (or dataset) 119. Such data may also be stored in external storage or other memories. The external storage may be implemented using a database management system (DBMS) managed by the CPU 104 and residing on a memory, such as a hard disk, RAM, or removable media. The external storage may be implemented on one or more additional computer systems. For example, the external storage may include a data warehouse system residing on a separate computer system, a cloud platform or system, a picture archiving and communication system (PACS), or any other hospital, medical institution, medical office, testing facility, pharmacy or other medical patient record storage system.

Imaging device 102 acquires medical images 120 associated with at least one patient. Such medical images 120 may be processed and stored in database 119. Imaging device 102 may be a radiology scanner (e.g., MR scanner) and/or appropriate peripherals (*e.g*., keyboard and display device) for acquiring, collecting and/or storing such medical images 120.

The workstation 103 may include a computer and appropriate peripherals, such as a keyboard and display device, and can be operated in conjunction with the entire system 100. For example, the workstation 103 may communicate directly or indirectly with the imaging device 102 so that the medical image data acquired by the imaging device 102 can be rendered at the workstation 103 and viewed on a display device. The workstation 103 may also provide other types of medical data 122 of a given patient. The workstation 103 may include a graphical user interface to receive user input via an input device (*e.g*., keyboard, mouse, touch screen voice or video recognition interface, etc.) to input medical data 122.

It is to be further understood that, because some of the constituent system components and method steps depicted in the accompanying figures can be implemented in software, the actual connections between the systems components (or the process steps) may differ depending upon the manner in which the present framework is programmed. Given the teachings provided herein, one of ordinary skill in the related art will be able to contemplate these and similar implementations or configurations of the present framework.

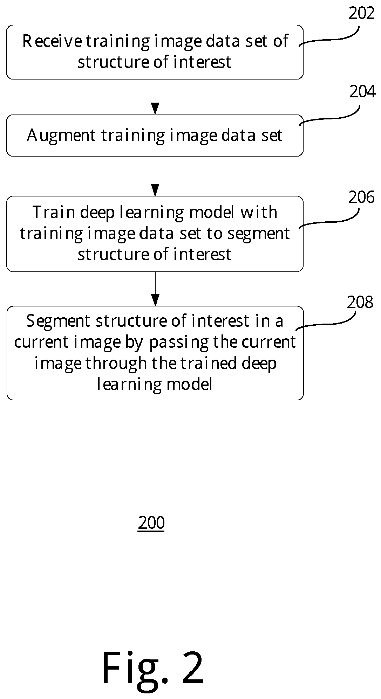

FIG. 2 shows an exemplary method 200 of image segmentation by a computer system. It should be understood that the steps of the method 200 may be performed in the order shown or a different order. Additional, different, or fewer steps may also be provided. Further, the method 200 may be implemented with the system 101 of FIG. 1, a different system, or a combination thereof.

At 202, segmentation engine 106 receives a training image data set of a structure of interest. The training image data set may include three-dimensional (3D) image volumes. The training image data set may be acquired from a patient by using techniques such as high-resolution computed tomography (HRCT), magnetic resonance (MR) imaging, computed tomography (CT), helical CT, X-ray, angiography, positron emission tomography (PET), fluoroscopy, ultrasound, single photon emission computed tomography (SPECT), or a combination thereof. The training image data may be retrieved from, for example, database 119 and/or acquired by imaging device 102. The structure of interest may be, for example, a bone structure such as the femur head bone or the cartilage that is attached to the surface of the femur head bone. The training image data set may include a small or limited number of images (e.g., 60 image scans from 38 subjects).

At 204, segmentation engine 106 augments the training image data set. Data augmentation strategies may be employed to increase the number of images by using the existing images in the training image data set. Such data augmentation strategies may include applying random transformations or noise on the existing images, such as shift, scaling, flip, deformation and histogram matching. The enlarged training image data set may be used to train a deep learning model 107 that is more generalizable and robust to new testing data. In order to deal with low-quality ground-truth (GT) issue, good image samples may be checked and selected as training and validating samples, so as to avoid adding bad GT into the model learning.

In some implementations, parameter tuning and optimization are performed. First, good training samples and GT samples are selected. Only such samples will be contributed for estimating the best network parameters. Second, to estimate the best network parameters, backward propagation optimization methods, such as stochastic gradient descent and Adam's optimization, may be performed to estimate the best network parameters in an iterative manner.

At 206, segmentation engine 106 trains a deep learning model 107 with the augmented training image data set to segment the structure of interest. A deep learning model is a machine learning structure that includes a cascade of multiple layers of nonlinear processing units for feature extraction and transformation, where each successive layer uses the output from the previous layer as input. The deep learning model learns multiple levels of representations that correspond to different levels of abstraction.

In some implementations, the deep learning model 107 is an unsupervised learning structure that includes stacked layers of learning nodes. The deep learning model 107 may be represented by, for example, a convolutional neural network (CNN) classifier. CNN is a class of deep, feed-forward artificial neural network that uses a variation of multilayer perceptrons designed to require minimal preprocessing. Other types of classifiers, such as random forests, may also be used.

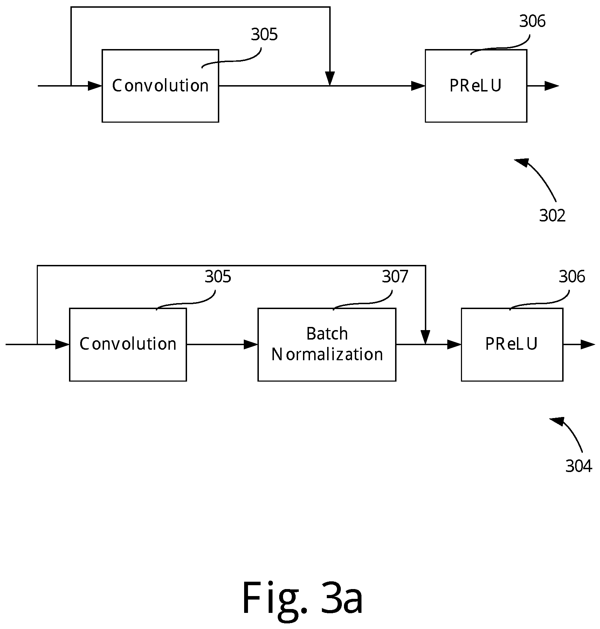

One exemplary fully convolutional CNN classifier that is trained end-to-end is the V-net, described in Milletari, F., Navab, N., Ahmadi, S.A., V-net: Fully convolutional neural networks for volumetric medical image segmentation, 3D Vision (3DV), 2016 Fourth International Conference on. pp. 565-571. IEEE (2016). In some implementations, the deep learning model 107 is a modified V-net. FIG. 3a shows an original V-Net component 302 and an exemplary modified V-Net component 304. The left portion (convolution 305) of each V-net component 302, 304 is a compression path that compresses the signal. The right portion (parametric rectified linear unit or PReLU 306) of each V-net component 302, 304 decompresses the signal until its original size is reached. The right portion of the V-net extracts features and expands the spatial support of the lower resolution feature maps in order to gather and assemble the necessary information to output a segmentation.

An additional layer may be added in the compression and decompression path to enforce additional robustness. In the exemplary modified V-Net component 304, a batch normalization (BatchNorm) layer 307 is added after the convolutional layer 305. Batch normalization seeks to normalize the inputs to layers within the network, instead of just normalizing the inputs to the network. An exemplary batch normalization layer is described in Ioffe, Sergey, and Christian Szegedy, Batch normalization: Accelerating deep network training by reducing internal covariate shift, International Conference on Machine Learning 2015.

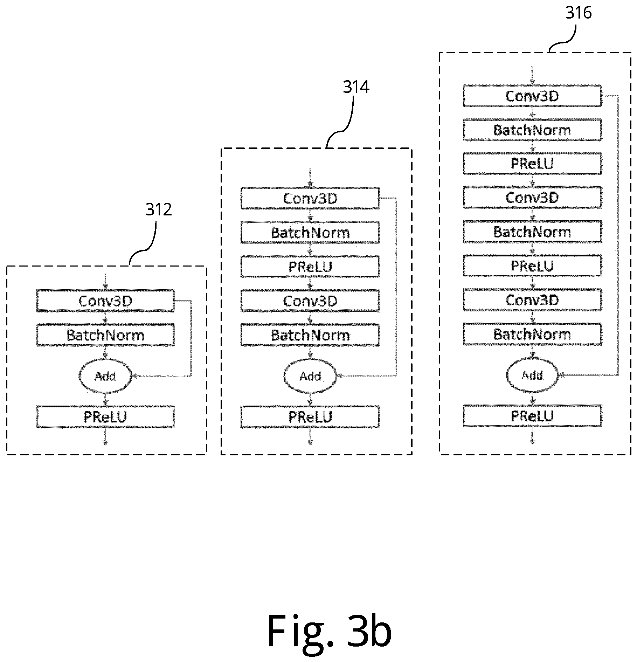

FIG. 3b shows exemplary architectures of three residual blocks 312, 314, 316. Residual block 312 has only one volumetric convolutional layer (Conv3D) preceding a batch normalization layer (BatchNorm), and the rectified linear unit (ReLU) layer is the parametric rectified linear unit (PReLU) in the tensorflow. Residual block 314 has only two volumetric convolutional layers (Conv3D). Each of the volumetric convolutional layers (Conv3D) precedes a batch normalization layer (BatchNorm). Residual block 316 has only three volumetric convolutional layers (Conv3D). Each of the volumetric convolutional layers (Conv3D) precedes a batch normalization layer (BatchNorm). All the convolutional layers (Conv3D) in the modified V-net may have a filter size of 3x3 and zero-padding of size 1. In deeper layers of the convolutional network where the resolution is lower, the residual block with more convolutional layers is used. More particularly, in the lowest-resolution layer, residual block 316 may be used. In higher-resolution layers, either residual block 312 or 314 may be used.

In addition, three pooling layers may be used instead of four pooling layers that are employed in the standard V-net. This is because too many pooling operations may make the deeper layers lose detailed structure information. Moreover, fewer pooling layers reduce computation and processor memory consumption. In some implementations, before feeding the input image into the first residual block, the feature abstraction may be pre-processed using a volumetric convolutional layer (Conv3D), a batch normalization layer (BatchNorm) and a parametric rectified linear unit (PReLU). The modified V-net achieved about 90% dice score on testing data (scans of 13 subjects) for femur bone segmentation.

In other implementations, the deep learning model 107 is a hybrid model that includes a V-net in a generative adversarial network (GAN) architecture. See Dai, W., Doyle, J., Liang, X., Zhang, H., Dong, N., Li, Y., Xing, E.P., Scan: Structure correcting adversarial network for chest x-rays organ segmentation, arXiv preprint arXiv:1703.08770 (2017). A GAN is a neural network composed up of two networks competing with each other. The two networks are typically referred to as the generator (G) (generates a data set) and the discriminator(D) (validates the data set). Such deep learning model 107 is particularly useful for improving the accuracy of segmenting a structure of interest that is smaller (e.g., bone cartilage). If the manual annotations are not perfect for all training image data, cases with good annotations may be manually selected from the training image data for training.

In some implementations, the hybrid model has two major components: (1) generator (G) to generate the data set; and (2) discriminator (D) to validate the data set. The generator (G) may be implemented as the modified V-net (e.g., with only two pooling layers), which is used to predict the mask image for segmentation. The discriminator (D) may be implemented as a deep CNN for binary classification, which is used to distinguish between the generated mask image from the G-network and a manually annotated input image.

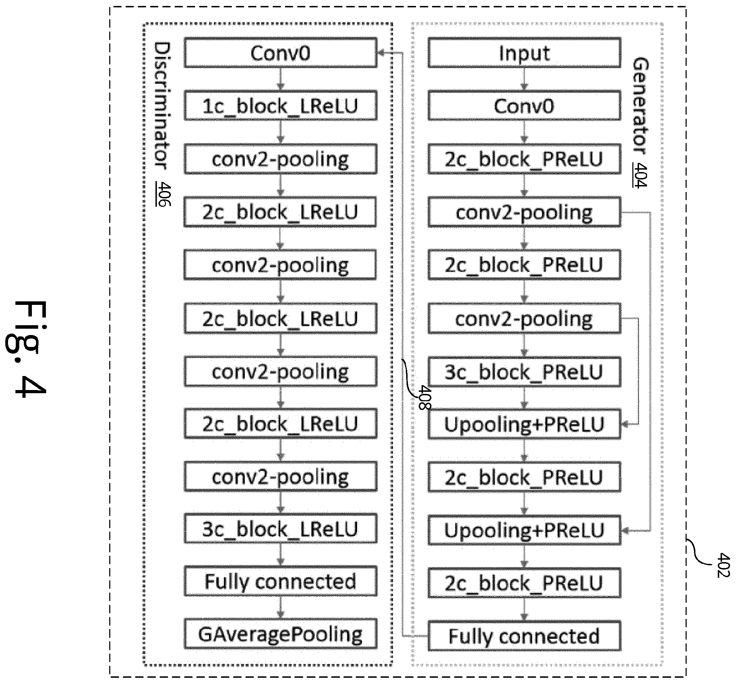

FIG. 4 shows an exemplary architecture of the hybrid model 402. The hybrid model 402 includes a generator (G) 404 and a discriminator (D) 406. The generator 404 uses a modified V-net architecture to produce a segmentation prediction mask image 408. The 2c_block_PReLU and 3c_block_PReLU are the residual blocks 314 and 316 respectively of FIG. 3B. The discriminator (D) 406 is a deep CNN, which is trained to distinguish between the generated mask image and the manually annotated image. The 1c_block_LReLU, 2c _block_LReLU and 3c_block_LReLU layers are similar to the residual blocks 312, 314 and 316 respectively in FIG. 3B, but use a Leaky Rectified Linear Unit (LReLU) instead of a PReLU.

The training of the G and D networks (404, 406) may be conducted alternately. For example, network G is trained for two iterations by keeping network D untrainable. Network D is then trained for one iteration by keeping G untrainable. A Stochastic Gradient Descent (SGD) optimizer may be used to train the D network by minimizing the binary cross entropy loss on D's output (e.g., label 1 for manual annotation, label 0 for generated mask from G). An Adam optimizer may be used to train G network by maximizing dice score of G's output and minimizing binary cross entropy of D's output (label 1 for generated mask to make G produce mask similar to annotation) at the same time. See Diederik Kingma and Jimmy Lei Ba, Adam: A Method for Stochastic Optimization, 3rd International Conference for Learning Representations, San Diego, 2015. The two losses may be weighted-summed to drive the G's update.

The input of D network includes not only generated mask images and manually annotated images, but also input training image data (e.g., MR images). For example, the input training image data may include a pair of input and mask images that are concatenated as a 2-channel input image with label 0 (fake). A pair of input and annotated images may be concatenated in the same way with label 1 (real). This is because the D network should judge the label image based on the corresponding input image. Because of the batch normalization layer in the network, in training D, different mini-batches may be constructed for inputs corresponding to label 0 and label 1. Specifically, all inputs with the same label may be put in the same mini-batch to have meaningful batch normalization. The hybrid model achieved 77.5% dice score on testing data (13 subjects), which is better than 72% dice score by using the modified V-net only.

Returning to FIG. 2, at 208, segmentation engine 106 segments the structure of interest in a current image by passing the current image through the trained deep learning model 107. As described herein, the trained deep learning model 107 may be a modified V-net or a hybrid model that includes a V-net in a GAN architecture. Other types of trained deep learning models are also useful. The segmented current image may be displayed at a user interface implemented at, for example, workstation 122. The segmented current image may be used to facilitate automated measurements or detection of abnormalities or diseases, and to guide diagnostic and/or treatment decisions. For example, a segmented femur bone may be used to compute alpha angle of femoral head-neck junction. The segmentation of femur bone and its cartilage may also be used to estimate knee osteoarthritis (OA).

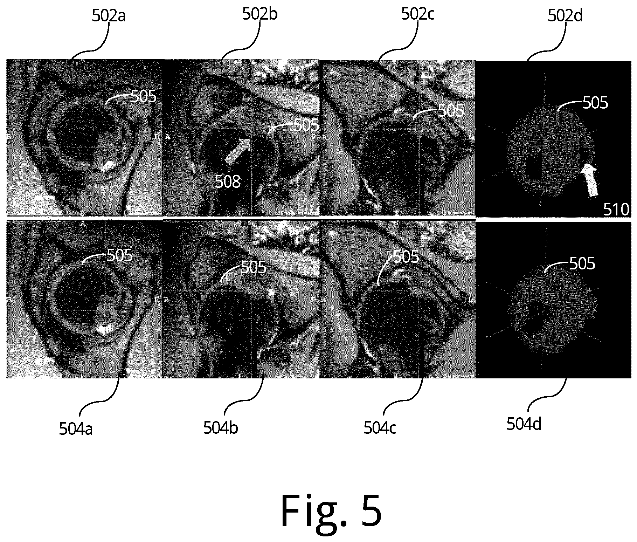

FIG. 5 shows exemplary current images 502a-d and 504a-d of segmented femur bone cartilage 505. Images 502a-d are generated by a trained modified V-net, while images 504a-d are generated by a trained hybrid model. Images 502a-c and 504a-c are orthogonal views and images 502d and 504d are three-dimensional views. The modified V-net model produced some over-segmentation 508 and under-segmentation 510, which was improved by the hybrid model.

While the present framework has been described in detail with reference to exemplary embodiments, those skilled in the art will appreciate that various modifications and substitutions can be made thereto without departing from the scope of the invention as set forth in the appended claims. For example, elements and/or features of different exemplary embodiments may be combined with each other and/or substituted for each other within the scope of the appended claims.

## Claims

1. A system for image segmentation, comprising:
a non-transitory memory device for storing computer readable program code; and
a processor device in communication with the memory device, the processor being operative with the computer readable program code to perform steps including
receiving a training image data set of a structure of interest,
augmenting the training image data set,
training a deep learning model with the augmented training image data set to segment the structure of interest, wherein the deep learning model comprises a modified V-net implemented in a generative adversarial network (GAN) architecture, and
segmenting the structure of interest in a current image by passing the current image through the trained deep learning model,
wherein the deep learning network comprises a generator to predict a segmentation mask image and a discriminator to distinguish between a manually annotated input image and the segmentation mask image,
wherein the generator comprises the modified V-net including multiple residual blocks,
wherein the modified V-net comprises only two pooling layers and wherein the deep learning model comprises a volumetric convolutional layer, a batch normalization layer and a parametric rectified linear unit prior to a first residual block for pre-processing a feature abstraction before feeding the image into the first residual block, wherein the structure of interest comprises bone cartilage and
wherein at least one of the multiple residual blocks comprises only two volumetric convolutional layers, wherein each of the volumetric convolutional layers precedes a batch normalization layer.

2. The system according to claim 1, wherein the modified V-net comprises three or less pooling layers.

3. The system according to any of the preceding claims, wherein at least one of the residual blocks comprises only three volumetric convolutional layers, wherein each of the volumetric convolutional layers precedes a batch normalization layer.

4. The system according to any of the preceding claims, wherein the discriminator comprises a deep convolutional neural network.

5. A computer-implemented method of image segmentation, comprising:
receiving a training image data set of a structure of interest,
augmenting the training image data set,
training a deep learning model with the augmented training image data set to segment the structure of interest, wherein the deep learning model comprises a modified V-net implemented in a generative adversarial network (GAN) architecture, and
segmenting the structure of interest in a current image by passing the current image through the trained deep learning model,
wherein the deep learning network comprises a generator to predict a segmentation mask image and a discriminator to distinguish between a manually annotated input image and the segmentation mask image,
wherein the generator comprises the modified V-net including multiple residual blocks,
wherein the modified V-net comprises only two pooling layers and wherein the deep learning model comprises a volumetric convolutional layer, a batch normalization layer and a parametric rectified linear unit prior to a first residual block for pre-processing a feature abstraction before feeding the image into the first residual block, wherein the structure of interest comprises bone cartilage and
wherein at least one of the multiple residual blocks comprises only two volumetric convolutional layers, wherein each of the volumetric convolutional layers precedes a batch normalization layer.

6. The method according to claim 5, wherein segmenting the structure of interest in the current image comprises segmenting a femur head bone in the current image.

7. The method according to claims 5 or 6, further comprises augmenting the training image data set to increase number of images in the training image data set.

8. The method according to any of claims 5 to 7, wherein training the deep learning model comprises training the generator and the discriminator alternately.

9. The method according to claim 8, wherein training the generator and the discriminator alternately comprises:
training the generator for two iterations by keeping the discriminator untrainable; and
training the discriminator for one iteration by keeping the generator untrainable.

10. The method according to any of the preceding claims 5 to 9, wherein the residual blocks comprise a first residual block with only one volumetric convolutional layer preceding a batch normalization layer.

11. The method according to any of the preceding claims 5 to 10, wherein the residual blocks comprise a third residual block with only three volumetric convolutional layers, wherein each of the three volumetric convolutional layers precedes a batch normalization layer.

12. One or more non-transitory computer-readable media embodying instructions executable by machine to perform operations, comprising:
receiving a training image data set of a structure of interest,
augmenting the training image data set,
training a deep learning model with the augmented training image data set to segment the structure of interest, wherein the deep learning model comprises a modified V-net implemented in a generative adversarial network (GAN) architecture, and
segmenting the structure of interest in a current image by passing the current image through the trained deep learning model,
wherein the deep learning network comprises a generator to predict a segmentation mask image and a discriminator to distinguish between a manually annotated input image and the segmentation mask image,
wherein the generator comprises the modified V-net including multiple residual blocks,
wherein the modified V-net comprises only two pooling layers and wherein the deep learning model comprises a volumetric convolutional layer, a batch normalization layer and a parametric rectified linear unit prior to a first residual block for pre-processing a feature abstraction before feeding the image into the first residual block, wherein the structure of interest comprises bone cartilage and wherein at least one of the multiple residual blocks comprises only two volumetric convolutional layers, wherein each of the volumetric convolutional layers precedes a batch normalization layer.

## Patentansprüche

1. Ein System zur Bildsegmentierung, umfassend:
eine nichtflüchtige Speichervorrichtung zum Speichern von computerlesbarem Programmcode; sowie
eine Prozessorvorrichtung, die mit der Speichervorrichtung in Verbindung steht, wobei der Prozessor in Verbindung mit dem computerlesbaren Programmcode arbeitet, um Schritte auszuführen, die Folgendes umfassen:
Empfangen eines Trainingsbilddatensatzes einer Struktur von Interesse,
Erweitern des Trainingsbilddatensatzes,
Trainieren eines Deep-Learning-Modells mit dem erweiterten Trainingsbilddatensatz, um die Struktur von Interesse zu segmentieren, wobei das Deep-Learning-Modell ein modifiziertes V-Net umfasst, das in einer GAN-Architektur (Generative Adversarial Network) implementiert ist, und
Segmentieren der Struktur von Interesse in einem aktuellen Bild, indem das aktuelle Bild durch das trainierte Deep-Learning-Modell geleitet wird,
wobei das Deep-Learning-Netzwerk einen Generator zur Vorhersage eines Segmentierungsmaskenbildes und einen Diskriminator zur Unterscheidung zwischen einem manuell annotierten Eingabebild und dem Segmentierungsmaskenbild umfasst,
wobei der Generator das modifizierte V-Net mit mehreren Residualblöcken umfasst,
wobei das modifizierte V-Net nur zwei Pooling-Schichten umfasst und wobei das Deep-Learning-Modell eine volumetrische Faltungsschicht, eine Batch-Normalisierungsschicht und eine parametrische rectified linear unit vor einem ersten Residualblock zur Vorverarbeitung einer Merkmalsabstraktion umfasst, bevor das Bild in den ersten Residualblock eingespeist wird, wobei die Struktur von Interesse Knochenknorpel umfasst und wobei mindestens einer der mehreren Residualblöcke nur zwei volumetrische Faltungsschichten umfasst, wobei jede der volumetrischen Faltungsschichten einer Batch-Normalisierungsschicht vorausgeht.

2. System nach Anspruch 1, wobei das modifizierte V-Net drei oder weniger Pooling-Schichten umfasst.

3. System nach einem der vorstehenden Ansprüche, wobei mindestens einer der Residualblöcke nur drei volumetrische Faltungsschichten umfasst, wobei jede der volumetrischen Faltungsschichten einer Batch-Normalisierungsschicht vorausgeht.

4. System nach einem der vorstehenden Ansprüche, wobei der Diskriminator ein tiefes konvolutionelles neuronales Netzwerk umfasst.

5. Ein computerimplementiertes Verfahren zur Bildsegmentierung, umfassend:
Empfangen eines Trainingsbilddatensatzes einer Struktur von Interesse,
Erweitern des Trainingsbilddatensatzes,
Trainieren eines Deep-Learning-Modells mit dem erweiterten Trainingsbilddatensatz, um die Struktur von Interesse zu segmentieren, wobei das Deep-Learning-Modell ein modifiziertes V-Net umfasst, das in einer GAN-Architektur (Generative Adversarial Network) implementiert ist, und
Segmentieren der Struktur von Interesse in einem aktuellen Bild, indem das aktuelle Bild durch das trainierte Deep-Learning-Modell geleitet wird, wobei das Deep-Learning-Netzwerk einen Generator zur Vorhersage eines Segmentierungsmaskenbildes und einen Diskriminator zur Unterscheidung zwischen einem manuell annotierten Eingabebild und dem Segmentierungsmaskenbild umfasst,
wobei der Generator das modifizierte V-Net mit mehreren Residualblöcken umfasst,
wobei das modifizierte V-Net nur zwei Pooling-Schichten umfasst und wobei das Deep-Learning-Modell eine volumetrische Faltungsschicht, eine Batch-Normalisierungsschicht und eine parametrische rectified linear unit vor einem ersten Residualblock zur Vorverarbeitung einer Merkmalsabstraktion umfasst, bevor das Bild in den ersten Residualblock eingespeist wird, wobei die Struktur von Interesse Knochenknorpel umfasst und wobei mindestens einer der mehreren Residualblöcke nur zwei volumetrische Faltungsschichten umfasst, wobei jede der volumetrischen Faltungsschichten einer Batch-Normalisierungsschicht vorausgeht.

6. Verfahren nach Anspruch 5, wobei das Segmentieren der Struktur von Interesse im aktuellen Bild das Segmentieren eines Femurkopfknochens im aktuellen Bild umfasst.

7. Verfahren nach Anspruch 5 oder 6, ferner umfassend das Erweitern des Trainingsbilddatensatzes, um die Anzahl der Bilder im Trainingsbilddatensatz zu erhöhen.

8. Verfahren nach einem der Ansprüche 5 bis 7, wobei das Trainieren des Deep-Learning-Modells das abwechselnde Trainieren des Generators und des Diskriminators umfasst.

9. Verfahren nach Anspruch 8, wobei das abwechselnde Trainieren des Generators und des Diskriminators Folgendes umfasst:
Trainieren des Generators für zwei Iterationen, während der Diskriminator nicht trainierbar gehalten wird; und
Trainieren des Diskriminators für eine Iteration, während der Generator nicht trainierbar gehalten wird.

10. Verfahren nach einem der vorstehenden Ansprüche 5 bis 9, wobei die Residualblöcke einen ersten Residualblock mit nur einer volumetrischen Faltungsschicht umfassen, die einer Batch-Normalisierungsschicht vorausgeht.

11. Verfahren nach einem der vorstehenden Ansprüche 5 bis 10, wobei die Residualblöcke einen dritten Residualblock mit nur drei volumetrischen Faltungsschichten umfassen, wobei jede der drei volumetrischen Faltungsschichten einer Batch-Normalisierungsschicht vorausgeht.

12. Ein oder mehrere nichtflüchtige, computerlesbare Medien, die maschinenausführbare Befehle zur Durchführung von Operationen verkörpern, umfassend:
Empfangen eines Trainingsbilddatensatzes einer Struktur von Interesse,
Erweitern des Trainingsbilddatensatzes,
Trainieren eines Deep-Learning-Modells mit dem erweiterten Trainingsbilddatensatz, um die Struktur von Interesse zu segmentieren, wobei das Deep-Learning-Modell ein modifiziertes V-Net umfasst, das in einer GAN-Architektur (Generative Adversarial Network) implementiert ist, und
Segmentieren der Struktur von Interesse in einem aktuellen Bild, indem das aktuelle Bild durch das trainierte Deep-Learning-Modell geleitet wird, wobei das Deep-Learning-Netzwerk einen Generator zur Vorhersage eines Segmentierungsmaskenbildes und einen Diskriminator zur Unterscheidung zwischen einem manuell annotierten Eingabebild und dem Segmentierungsmaskenbild umfasst,
wobei der Generator das modifizierte V-Net mit mehreren Residualblöcken umfasst,
wobei das modifizierte V-Net nur zwei Pooling-Schichten umfasst und wobei das Deep-Learning-Modell eine volumetrische Faltungsschicht, eine Batch-Normalisierungsschicht und eine parametrische rectified linear unit vor einem ersten Residualblock zur Vorverarbeitung einer Merkmalsabstraktion umfasst, bevor das Bild in den ersten Residualblock eingespeist wird, wobei die Struktur von Interesse Knochenknorpel umfasst und wobei mindestens einer der mehreren Residualblöcke nur zwei volumetrische Faltungsschichten umfasst, wobei jede der volumetrischen Faltungsschichten einer Batch-Normalisierungsschicht vorausgeht.

## Revendications

1. Système de segmentation d'images, comprenant :
un dispositif de mémoire non transitoire destiné à stocker un code de programme lisible par ordinateur ; et
un dispositif processeur en communication avec le dispositif de mémoire, le processeur fonctionnant avec le code de programme lisible par ordinateur pour exécuter des étapes comprenant
la réception d'un ensemble de données d'images d'apprentissage d'une structure d'intérêt,
l'enrichissement de l'ensemble de données d'images d'apprentissage,
l'entraînement d'un modèle d'apprentissage profond avec l'ensemble de données d'images d'apprentissage enrichi afin de segmenter la structure d'intérêt, dans lequel le modèle d'apprentissage profond comprend un V-net modifié implémenté dans une architecture de réseau antagoniste génératif (GAN), et
la segmentation de la structure d'intérêt dans une image courante en faisant passer l'image courante à travers le modèle d'apprentissage profond entraîné,
dans lequel le réseau d'apprentissage profond comprend un générateur pour prédire une image de masque de segmentation et un discriminateur pour distinguer une image d'entrée annotée manuellement de l'image de masque de segmentation,
dans lequel le générateur comprend le V-net modifié incluant plusieurs blocs résiduels,
dans lequel le V-net modifié ne comprend que deux couches de pooling et dans lequel le modèle d'apprentissage profond comprend une couche convolutive volumétrique, une couche de normalisation par lots et une unité linéaire rectifiée paramétrique en amont d'un premier bloc résiduel pour le prétraitement d'une abstraction de caractéristiques avant d'introduire l'image dans le premier bloc résiduel, dans lequel la structure d'intérêt comprend du cartilage osseux et dans lequel au moins l'un des multiples blocs résiduels comprend uniquement deux couches convolutives volumétriques, dans lequel chacune des couches convolutives volumétriques précède une couche de normalisation par lots.

2. Système selon la revendication 1, dans lequel le V-net modifié comprend trois couches de pooling ou moins.

3. Système selon l'une quelconque des revendications précédentes, dans lequel au moins l'un des blocs résiduels comprend uniquement trois couches convolutives volumétriques, dans lequel chacune des couches convolutives volumétriques précède une couche de normalisation par lots.

4. Système selon l'une quelconque des revendications précédentes, dans lequel le discriminateur comprend un réseau neuronal convolutif profond.

5. Procédé de segmentation d'images mis en œuvre par ordinateur, comprenant :
la réception d'un ensemble de données d'images d'apprentissage d'une structure d'intérêt,
l'enrichissement de l'ensemble de données d'images d'apprentissage,
l'entraînement d'un modèle d'apprentissage profond avec l'ensemble de données d'images d'apprentissage enrichi afin de segmenter la structure d'intérêt, dans lequel le modèle d'apprentissage profond comprend un V-net modifié implémenté dans une architecture de réseau antagoniste génératif (GAN), et
la segmentation de la structure d'intérêt dans une image courante en faisant passer l'image courante à travers le modèle d'apprentissage profond entraîné,
dans lequel le réseau d'apprentissage profond comprend un générateur pour prédire une image de masque de segmentation et un discriminateur pour distinguer une image d'entrée annotée manuellement de l'image de masque de segmentation,
dans lequel le générateur comprend le V-net modifié incluant plusieurs blocs résiduels,
dans lequel le V-net modifié ne comprend que deux couches de pooling et dans lequel le modèle d'apprentissage profond comprend une couche convolutive volumétrique, une couche de normalisation par lots et une unité linéaire rectifiée paramétrique en amont d'un premier bloc résiduel pour le prétraitement d'une abstraction de caractéristiques avant d'introduire l'image dans le premier bloc résiduel, dans lequel la structure d'intérêt comprend du cartilage osseux et dans lequel au moins l'un des multiples blocs résiduels comprend uniquement deux couches convolutives volumétriques, dans lequel chacune des couches convolutives volumétriques précède une couche de normalisation par lots.

6. Procédé selon la revendication 5, dans lequel la segmentation de la structure d'intérêt dans l'image courante comprend la segmentation d'un os de la tête fémorale dans l'image courante.

7. Procédé selon l'une des revendications 5 ou 6, comprenant en outre l'enrichissement de l'ensemble de données d'images d'apprentissage afin d'accroître le nombre d'images dans ledit ensemble de données d'images d'apprentissage.

8. Procédé selon l'une quelconque des revendications 5 à 7, dans lequel l'entraînement du modèle d'apprentissage profond comprend l'entraînement alterné du générateur et du discriminateur.

9. Procédé selon la revendication 8, dans lequel l'entraînement alterné du générateur et du discriminateur comprend :
l'entraînement du générateur pendant deux itérations en maintenant le discriminateur non entraînable ; et
l'entraînement du discriminateur pendant une itération en maintenant le générateur non entraînable.

10. Procédé selon l'une quelconque des revendications précédentes 5 à 9, dans lequel les blocs résiduels comprennent un premier bloc résiduel comportant une seule couche convolutive volumétrique précédant une couche de normalisation par lots.

11. Procédé selon l'une quelconque des revendications précédentes 5 à 10, dans lequel les blocs résiduels comprennent un troisième bloc résiduel comportant uniquement trois couches convolutives volumétriques, dans lequel chacune des trois couches convolutives volumétriques précède une couche de normalisation par lots.

12. Un ou plusieurs supports lisibles par ordinateur non transitoires incorporant des instructions exécutables par une machine pour effectuer des opérations, comprenant :
la réception d'un ensemble de données d'images d'apprentissage d'une structure d'intérêt,
l'enrichissement de l'ensemble de données d'images d'apprentissage,
l'entraînement d'un modèle d'apprentissage profond avec l'ensemble de données d'images d'apprentissage enrichi afin de segmenter la structure d'intérêt, dans lequel le modèle d'apprentissage profond comprend un V-net modifié implémenté dans une architecture de réseau antagoniste génératif (GAN), et
la segmentation de la structure d'intérêt dans une image courante en faisant passer l'image courante à travers le modèle d'apprentissage profond entraîné,
dans lequel le réseau d'apprentissage profond comprend un générateur pour prédire une image de masque de segmentation et un discriminateur pour distinguer une image d'entrée annotée manuellement de l'image de masque de segmentation,
dans lequel le générateur comprend le V-net modifié incluant plusieurs blocs résiduels,
dans lequel le V-net modifié ne comprend que deux couches de pooling et dans lequel le modèle d'apprentissage profond comprend une couche convolutive volumétrique, une couche de normalisation par lots et une unité linéaire rectifiée paramétrique en amont d'un premier bloc résiduel pour le prétraitement d'une abstraction de caractéristiques avant d'introduire l'image dans le premier bloc résiduel, dans lequel la structure d'intérêt comprend du cartilage osseux et dans lequel au moins l'un des multiples blocs résiduels comprend uniquement deux couches convolutives volumétriques, dans lequel chacune des couches convolutives volumétriques précède une couche de normalisation par lots.
